# EUROPEAN PATENT APPLICATION

(11) **EP 1 253 552 A1**
(43) Date of publication of application: **30.10.2002**
(21) Application number: 02252566.1
(22) Date of filing: 10.04.2002
(51) Int. Cl.: G06K 19/07, G06K 15/10, G06K 7/00, G06K 7/10, B41J 2/175

(54) **Memory on a consumer device used to designate recycle information**

(30) Priority: 24.04.2001 US 841887
(71) Applicant: Hewlett-Packard Company, Palo Alto, CA 94304 (US)
(72) Inventor: Bullock, Michael L., San Diego, CA 92128 (US); Villegas, Antonio J., Monmouth, OR 97361 (US)
(74) Representative: Jackson, Richard Eric

(57) **Abstract**

Embodiments of the present invention comprise containers for consumable substances (112) having electronic memory components (114) programmed with coded information designating recycle information. The electronic memory components (114) may be read-only-memories (ROMs); programmable read-only-memories (PROMs); electrically erasable programmable read-only-memories (EEPROMs); non-volatile random-access-memories (NVRAMs); volatile random-access-memories (RAMs) with a battery; or any other type of electronic memory. The electrical interfaces to the memory components preferably comprise serial data links, which may be either hard-wired data links through electrical connectors, or wireless data links.

## Description

### BACKGROUND OF THE INVENTION

The present invention relates to a memory component on a consumer item used to designate recycle information, and methods.

Recent years have witnessed an increased awareness by consumers of the desirability of recycling. Recycling by consumers reduces the need for the extraction of new raw materials from the environment, and also reduces the volume of municipal waste that must be disposed of in landfills. Recycling also serves to keep hazardous substances out of the environment.

Plastics make up a significant proportion of municipal garbage. Recycled thermoplastics, such as polyethylene, polypropylene, polystyrene, and polyvinyl chloride, may be remelted to form new articles, but must be properly sorted by type when recycled. Thermosetting plastics such as epoxy resins and polyurethane may also be reutilized by shredding for use as filler material.

Many companies have developed recycling programs for their products. These programs may include minimizing the number of parts used in an item, and manufacturing parts only with recyclable materials. The programs typically also include the use of material identification codes which facilitate the separation of recycled components into similar/dissimilar materials. Plastic parts are typically marked according to ISO 11469, with the material identification codes molded directly on the plastic parts.

Unfortunately, with many consumable items it may be difficult for the consumer to easily determine the proper method of recycling or disposal. A single consumable item may be composed of several different materials, and items which appear similar may in fact require quite different recycling methods. An ink cartridge for an inkjet printer, for example, may be fabricated from several different types of plastic and metals, and when "empty" may contain ink-saturated foam material and residual ink. Absent specific instructions on how to recycle items, the consumer may choose to simply discard the item.

Programs which permit the consumer to recycle unsorted items are a partial solution, but then require the recycling facility to determine how to properly break down and recycle the constituent parts.

Programs for recycling inkjet cartridges, for example, may include recycling bins placed at office supply stores, where the consumer may deposit "empty" cartridges, or mailers which permit the consumer to mail empty cartridges to a central recycling facility. The facility must then determine the proper recycling methods for the different cartridges returned, which may be very similar in outward appearance yet have very different recycling requirements.

Further problems exist with devices which comprise both a consumable substance and components which have an extended but ultimately limited service life. For example, a cartridge for an inkjet printer may include both a supply of ink, which is consumed during printing, and a printhead. The printhead typically has serviceable life remaining after the initial supply of ink is exhausted. While replenishing the ink supply allows the life of the cartridge to be extended, the print quality will degrade over time as the serviceable lifetime of the printhead is reached. It may be difficult for an individual consumer or for a cartridge refurbishing facility to easily ascertain the number of times the cartridge has been refilled, and whether the printhead end-of-life has been reached.

In still other applications, recycling may include the periodic performance of maintenance on items circulating through a supply chain. Examples include re-usable containers, such as those used for transporting fluids, and fuel cells. The seals on a chemical container, for example, may require replacement once every three times the container is refilled. Absent a simple method of determining the previous usage of a particular container, it may necessary to uniquely identifying each container and implement a database system to track the passage of each item through the supply chain.

Similarly, there are applications in which it is important to prevent a reusable item from being reused in an incompatible manner. A fluid container, for example, may be suitable for a variety of fluids when first manufactured, but, once used for one particular substance, may be unsuitable for use with a different, incompatible substance. With inkjet cartridges, a cartridge may have originally been filled with an ink formulation which is incompatible with other ink formulations; improper refurbishment of the cartridge may result in poor print quality or damage to the printer.

There is therefore a need for devices and methods which facilitate the determination of the proper recycling procedures for a consumer item, both for use by the individual consumer and by recycling facilities.

### SUMMARY OF THE INVENTION

Embodiments of the present invention comprise containers for consumable substances having electronic memory components programmed with coded information designating recycle information. The electronic memory components may be read-only-memories (ROMs); programmable read-only-memories (PROMs); electrically erasable programmable read-only-memories (EEPROMs); non-volatile random-access- memories (NVRAMs); volatile random-access-memories (RAMs) with a battery; or any other type of electronic memory. The electrical interfaces to the memory components preferably comprise serial data links, which may be either hardwired data links through electrical connectors, or wireless data links.

The memory components are programmed with coded recycle instructions directed towards a consumer, a recycling facility, or both. Embodiments of the invention also include memory that is alterable, which allows support of more complicated recycling scenarios, such as refurbishing and refilling of items.

Other aspects and advantages of the present invention will become apparent from the following detailed description, taken in conjunction with the accompanying drawings, illustrating by way of example the principles of the invention.

### BRIEF DESCRIPTION OF THE DRAWINGS

Fig. 1 is a conceptual flow diagram illustrating one embodiment of the basic concept of the invention as applied to inkjet print cartridges;

Fig. 2 is a flow chart illustrating one embodiment of the invention as applied to a simple consumer recyling situation;

Fig. 3 is a flow chart illustrating an alternate embodiment of the present invention as applied to a refill / refurbishment situation;

Fig. 4 illustrates one embodiment of the present invention utilizing an electrical connector to access the memory component;

Fig. 5 is a block diagram illustrating the typical flow of information in the embodiment of Fig. 4;

Fig. 6 illustrates a second embodiment of the present invention having a contactless interface;

Fig. 7 is a block diagram illustrating the typical flow of information using the memory device of Fig. 6; and

Fig. 8 is a block diagram further illustrating the contactless interface of the memory device of Fig. 6.

### DESCRIPTION OF THE PREFERRED EMBODIMENT

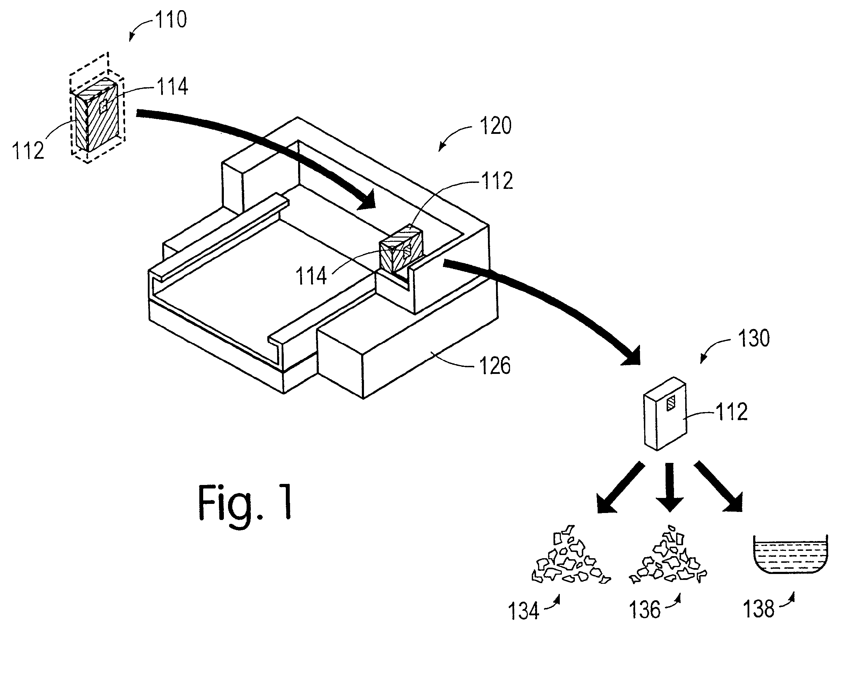

Figure 1 illustrates the basic concept of the present invention as applied to a consumable item such as an inkjet cartridge. At 110, a new or replenished cartridge 112 has been acquired by the consumer. The new cartridge is illustrated with shading to denote that it is "full" of consumable substance, such as ink. The cartridge includes a memory component 114 which has been encoded with a recycle code prior to purchase of the cartridge by the consumer. The recycle code is typically a short identifier number that uniquely designates the manner in which the consumable item is to be recycled. Typically the memory component is of the type which retains information in the absence of applied power, such as a read only memory (ROM), programmable read only memory (PROM), an electrically erasable programmable read only memory (EEPROM), or a non-volatile random access memory (NVRAM). Other types of electronic memory are also suitable, such as a random-access-memory (RAM) with a battery.

At 120, the consumer utilizes the consumable 112 in a utilizing device 124 such as an inkjet printer. In the preferred embodiment of the invention, the utilizing device 126 includes the capability to communicate with or "read" the consumable memory component 114, either through electrical contacts on the consumable or through a wireless interface, as described below.

When the consumable substance is depleted and the consumer wishes to recycle the empty container, the preferred embodiment of the present invention contemplates that the utilizing device will query the consumable memory for the recycle code, and prompt the consumer to properly dispose of the container. In the case of an inkjet cartridge utilized by a printer, the software print driver in a computer (not shown in Fig. 1) connected to the printer may include routines to read the memory component 114 and display the appropriate recycle information to the consumer.

The memory component may also be utilized by a recycling or refurbishing facility to determine the proper handling of the consumer item, as discussed below.

At 130, the consumable 112 (now empty, as denoted by the absence of shading) is broken down for recycling of its constituent parts. In the example illustrated in Fig. 1, the printer cartridge is disassembled and the metal 134 and plastic 136 parts shredded; any residual ink or foam material 138 is separately recovered. Each of the constituent materials may then be properly recycled or disposed of.

The memory component on the consumable may also be utilized in more complex recycling or refurbishing situations, as discussed below.

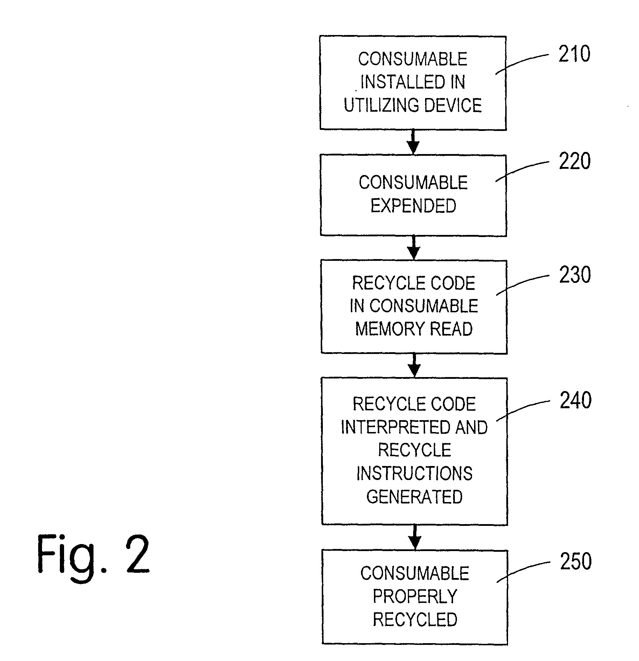

Figure 2 is a flow diagram reiterating the basic concept of the present invention as applied to a consumable item such as an inkjet cartridge. At 210, the consumable is installed in the utilizing device. At 220, the consumer has fully utilized the consumable item and the consumable substance in the item is expended. To determine the proper method of disposing of the empty item, the recycle code in the consumable memory is read at 230, typically by a computer device. The recycle code is interpreted and recycle instructions to the consumer are generated at 240. Following the instructions, the consumer recycles the item at 250.

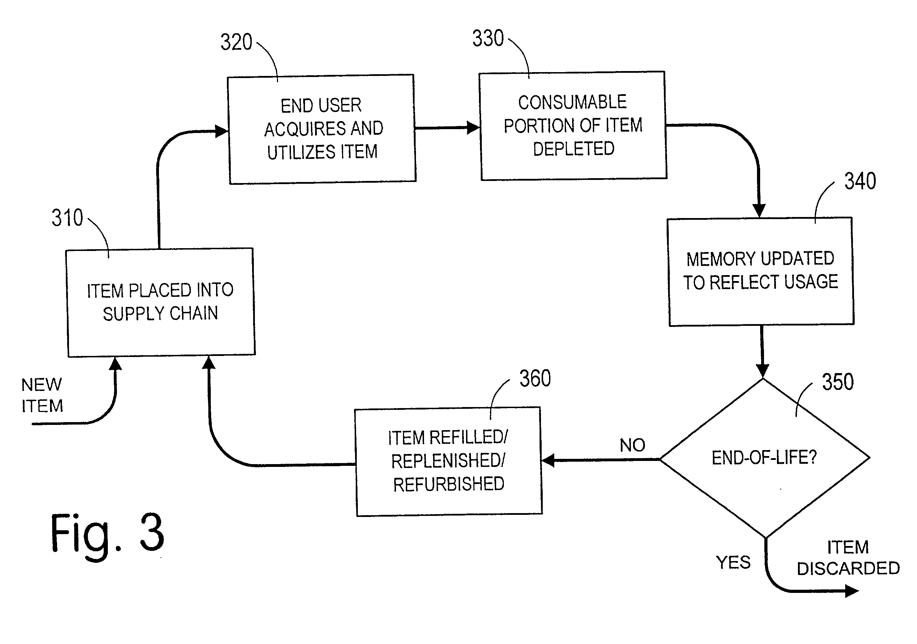

Figure 3 is a flow chart illustrating how the memory component is utilized to store and retrieve recycle or refurbishment information in a more complex situation. The situation illustrated in Figure 3 contemplates a consumable item which has remaining useful life after the initial supply of consumable substance is exhausted. For example, an ink cartridge or ink supply may be refilled with ink and returned to the supply chain. Since the consumable item may deteriorate over time, however, it is desirable to chronicle the number of times it has been refurbished or refilled. In an inkjet cartridge, deterioration of the printhead may limit the useful life. In other containers, there may be a need to periodically inspect or refurbish the container to preserve container's integrity, such as by replacing seals. In still other applications, it may be important to identify items which have previous been utilized for an incompatible use.

A newly manufactured item enters the supply chain at the left side of Figure 3, and is placed into circulation along with refurbished/refilled items at 310. At the time of manufacture, the memory component of the item has been set to indicate that it is "new" (alternatively, the memory may be set at some point in the distribution chain). The end user acquires and utilizes the item at 320. In the example of an inkjet print cartridge, the end user would typically purchase the cartridge from a supplier and install it in an inkjet printer. At 330, the consumable portion of the item has been depleted; in the example of an inkjet print cartridge, the cartridge has run out of usable ink.

At some point prior to, during, or after the end user's utilization of the item, the memory component on the item is updated 340 to reflect usage of the item. Updating of the memory component may occur during the installation process of the item; when the utilizing apparatus detects that the consumable portion of the item is exhausted; at some other convenient point during the end user's utilization of the item; or upon delivery of the item to a recycling facility. In the example of an inkjet cartridge, the printer driver software may most conveniently update the memory component upon detecting that an "out of ink" condition exists.

Based upon the updated memory contents, the consumer or the recycling facility may then determine 350 if the item has reached the end of its useful life, or if the item may be refilled, replenished, or refurbished 360. In the example of an inkjet cartridge, the printer driver software may inform the user of the proper method of disposal for the item at the time that an "out of ink" condition is detected.

Items which are suitable for refilling, replenishing, or refurbishing are processed by the recycling and returned to a supply chain 310 for further use by consumers.

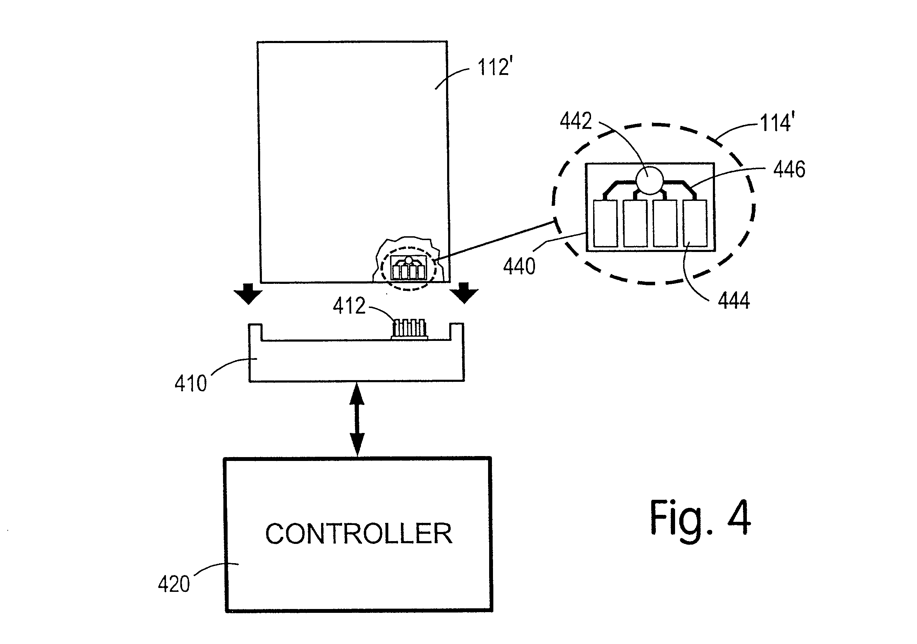

Figure 4 illustrates one exemplary embodiment of a consumer item 112', such as an inkjet cartridge, with a memory component 114' to designate recycle information. In the embodiment of Figure 4, the memory component includes electrical contacts for mating with an external electrical connector.

The memory component 114' of the exemplary embodiment is formed as a small printed circuit assembly 440, with a plurality of printed electrical contacts 444 for mating with an external connector 412. Printed wiring 446 on the printed circuit assembly provides electrical communication between the electrical contacts and integrated circuit memory 442, which in the exemplary embodiment is encapsulated in a protective material such as epoxy.

The integrated circuit memory 442 of the exemplary embodiment is a serial input/output memory, as are well known in the art. Such memories may have an asynchronous serial data interface, requiring only a single electrical data lead, plus a case ground return, for data input and output. Data input and output from the one wire memory is accomplished via a protocol wherin various length pulses are employed which evidence the beginning of a read/write action. Those pulses are followed by bit-by-bit transfers, wherein ones and zeros are manifest by different pulse lengths. Alternatively, the memories may have a synchronous serial interface including a clock line. Other serial input/output memories are also usable with the present invention, as are other, non-serial memory configurations.

U.S. Pat. No. 5,699,091 entitled "Replaceable Part With Integral Memory For Usage, Calibration And Other Data" assigned to the assignee of the present invention, further describes the use and operation of such a memory device. In the application disclosed and claimed in the 5,699,091 patent, the memory device is utilized to allow a printer to access replaceable part parameters to insure high print quality. By incorporating the memory device into the replaceable part and storing replaceable part parameters in the memory device within the replaceable component, the printing system is able to automatically update the parameters upon installation of the part into the printing system. This automatic updating of printer parameters frees the user from having to update printer parameters each time a replaceable component is newly installed. In addition to allowing the printer to optimize print quality, the memory is used to prevent inadvertent damage to the printer resulting from improper operation, such as operating after the supply of ink is exhausted or operating with the wrong or non-compatible printer components.

When utilized by the consumer, the consumable item 112' with the memory component 114' is mated to a receiving station 410, such as the carriage of an inkjet printer. The consumable item and receiving station may include other interconnections, such as other electrical connections or fluid connections. The receiving station in turn is in data communication with a controller 420, which allows reading of the data in the memory component, such as by printer driver software. In the more complex recycling situations described with respect to figure 3, the controller may also have the capability to alter the data in the memory component.

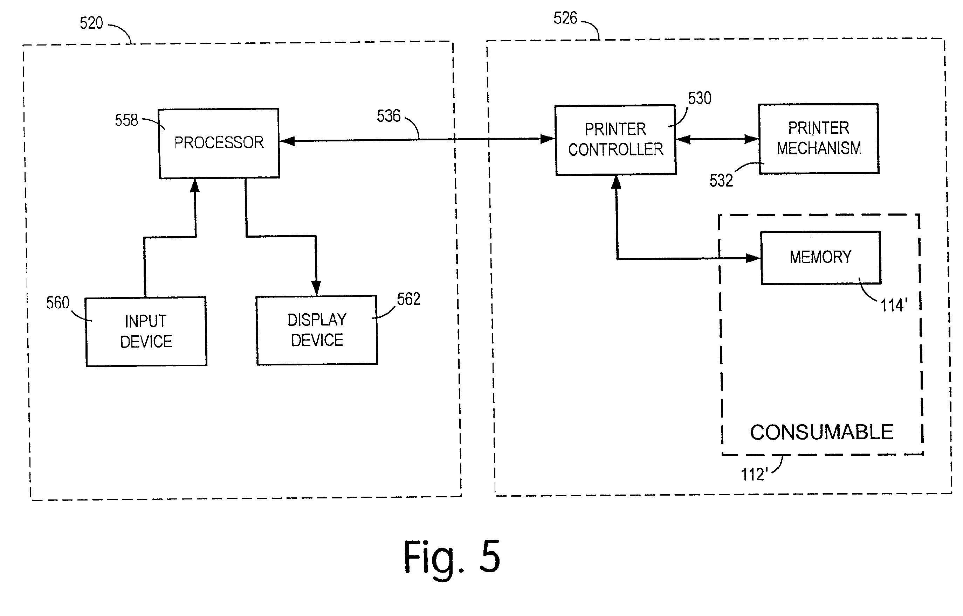

Figure 5 is a block diagram further illustrating the electrical interconnections in the exemplary case of an inkjet printer and printer cartridge. Typically, the inkjet printer 526 includes a printer controller 530 which is in electrical communication with the printer mechanism 532. In the present invention, the printer controller is also in electrical communication with the memory component 114' on the consumable 112'. The electrical communication with the memory component may be one directional, with the controller having the capability only to read the memory component; or the communication may be bi-directional, with the controller having the capacity to alter the memory contents, as discussed above.

Typically the printer 526 is electrically connected to processing equipment 520 over a printer data link 536. The processing equipment generally is a computer processor 558 which is connected to one or more input device 560 and a display device 562. In an embodiment of the present invention, the print driver software resident in the processor 558 would include routines for accessing the memory 114' in the consumable 112' through the printer controller 530, and for decoding the encoded recycle information. The print driver software would then generate prompts to the computer user and display the prompts on the display device 562 instructing the user on the proper recycling methods for the particular consumable. Alternatively, the printer itself may have a display, and would display the recycle information to the user.

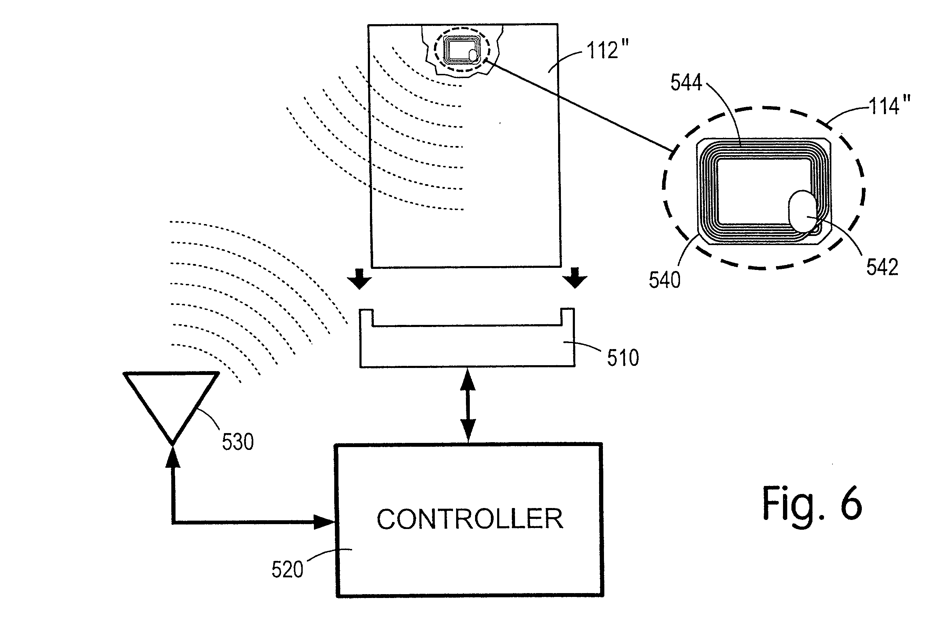

Figure 6 illustrates a second embodiment of the invention, in which a wireless data link is used for communicating with the memory component. In the implementation of Fig. 6, the memory component and wireless link used for recycle information of an ink jet cartridge may be shared with circuitry providing the printer with other information about the cartridge, such as a determination of the remaining ink supply in the cartridge and other status and compatibility information. One method contemplated for attaching the memory component and wireless data link to the consumable is to first place the electronic components on a substrate containing sensors for detecting the remaining ink supply, and then affix the label to the ink jet cartridge.

The memory component 114" comprises an integrated circuit 542 which is die bonded and wire bonded to a substrate 540, and then encapsulated in epoxy. A printed circuit antenna 544 is formed on the substrate to receive data and power and to transmit data. When utilized by the consumer, the consumable item 112" with the memory component 114" is mated to a receiving station 510, such as the carriage of an inkjet printer. The consumable item and receiving station may include other interconnections, such as electrical connections or fluid connections. The receiving station may, for example, be in data communication with a controller 520 to allow print data to be sent to the printheads. In the embodiment of Fig. 6, communication between the controller 520 and the memory component 114" is through a wireless data link 530, which allows reading of the data in the memory component, such as by printer driver software. In the more complex recycling situations described with respect to figure 3, the controller may also have the capability to alter the data in the memory component.

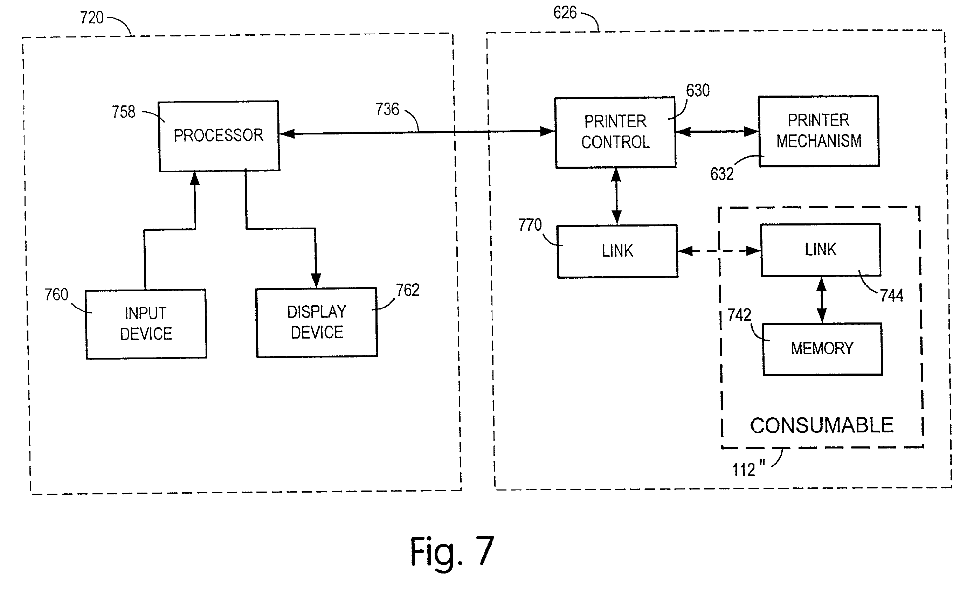

Figure 7 is a block diagram further illustrating the electrical interconnections in the exemplary case of an inkjet printer and printer cartridge utilizing a wireless data link. The printing system 626 includes the linking device 770; an associated linking device 744 is contained on consumable 112". The links 770 and 744 allow information to be transferred between the consumable and the printing system 626 without direct electrical contact. Among the information passed between the link 744 and the link 770 are the recycle information and consumable status information. This status information includes marking material status such as a low ink signal or a signal indicative of remaining ink.

The status of the consumable item 112" can be retrieved either under control of the control device 630 such as at device initialization, at periodic intervals, or status can be requested by the customer. In response to the request for a consumable item 112" status, the control device 630 retrieves status information either for printing this information using the printer mechanism 632 or displaying this information using the display device 762 associated with the processor 758.

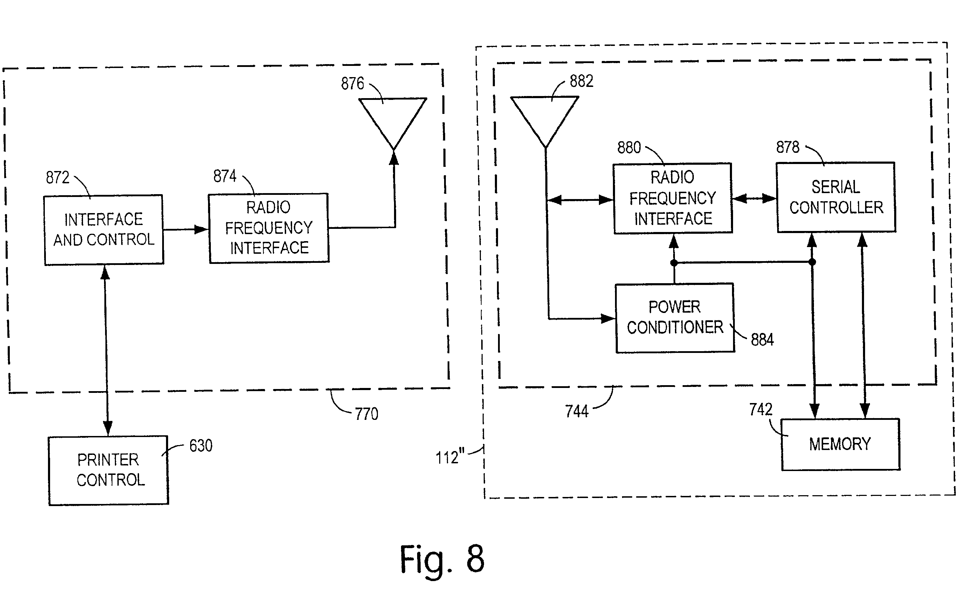

Fig. 8 depicts further detail of the link device 744 on the consumable and the corresponding link device on the host printer system 770. The linking device 770 associated host printer system includes a serial controller 872, a radio frequency interface 874, and an antenna 876. The serial controller 872 controls the transfer of information between the printer control 630 and the radio frequency interface 774. The serial controller 872 is preferably a microprocessor, a programmable controller or a hardware implemented controller that performs the necessary interface and data manipulation functions for passing information between the printer control 630 and the radio frequency interface 874. Information transferred between the printer control 630 and the serial controller 872 includes command information for requesting status as well as the status information itself. This command information is provided to the linking device 744, whereupon the linking device provides the requested status information. In one preferred embodiment, information is transferred between the serial controller 872 and the printer control 630 in a parallel format, and information is transferred between the serial controller 872 and the radio frequency interface 874 in a serial format.

The radio frequency interface 874 receives information from the serial controller 872 in a serial fashion and converts this information into time varying voltages at the antenna 876. These time varying voltages are preferably in a standard radio frequency range such as 125 kilohertz to 13.56 megahertz. Radio frequencies outside this range may also be suitable. Transmission of information using a radio frequency technology is used in financial transaction cards provided by financial institutions for various types of transactions such as banking and using debit cards and credit cards. These financial transaction cards are sometimes referred to as "smart cards". Similar technology is also used in inventory systems that are sometimes referred to as radio frequency identification (RFID) technology.

The link 744 associated with consumable item similar to the link device 770 associated with the printing system. The link 744 includes a serial controller 878, a radio frequency interface 880 and an antenna 882, each of which are similar to corresponding features of the link 770. The voltages are induced on antenna 882 in response to time varying voltages provided to antenna 876. Information is extracted from the time varying voltages induced on antenna 882 by the radio frequency interface 880. Information is passed from the radio frequency interface 880 to the serial controller 878. In response to command information, the serial controller 878 can store information such as recycle information or ink level information in the electrical storage device 742. In addition, in response to command information, the serial controller may retrieve information from the electrical storage device 742. The information such as recycle information or ink level information is transferred to the serial controller 878 to be sent to the link 870 associated with the printer portion consumable item 112" in a manner similar to the transfer of information from the link 770 to link 744.

In one embodiment, each of the link 744 and the electrical storage device 742 is either an active device powered by a battery or a passive device that stores energy in a storage device such as a capacitor. In the case of a passive device, energy is provided to the capacitor by voltages induced on the antenna 882. Voltages are induced on the antenna 882 due to time varying voltages that are applied to the antenna 876 by the radio frequency interface 874. The induced voltage at the antenna 882 is provided to a power conditioner 884 which converts these time varying voltages into a single polarity voltage that is suitable as a supply voltage for each of the electrical storage device 742, the serial controller 878 and the radio frequency interface 880. In one embodiment, the power conditioner 884 rectifies a time varying voltage that is induced on the antenna 882 and filters this rectified voltage to provide a suitable supply voltage. Use of a power conditioner 884 on the link 744 eliminates the need for a direct power and ground connection between the consumable item 112" and the printing system.

The present invention is applicable to a variety of other types of printing systems as well. For example, the present invention is suitable for use with electrophotographic printing systems. In the case of electrophotographic printing systems, the replaceable printing component is a replaceable component such as a supply of printing material usually referred to as a toner cartridge.

In the situation where recycle information is to be retrieved from a consumable item by a recycling facility, the recycling facility would have apparatus having a similar wireless data link to that described with respect to the printer system above. The recycling information could thus be retrieved from the consumable without the need for a physical electrical connection to the consumable, which simplifies handling of the recycled articles and allows for automation of the recycling process.

The above is a detailed description of particular embodiments of the invention. It is recognized that departures from the disclosed embodiments may be within the scope of this invention and that obvious modifications will occur to a person skilled in the art. It is the intent of the applicant that the invention include alternative implementations known in the art that perform the same functions as those disclosed. This specification should not be construed to unduly narrow the full scope of protection to which the invention is entitled.

The corresponding structures, materials, acts, and equivalents of all means or step plus function elements in the claims below are intended to include any structure, material, or acts for performing the functions in combination with other claimed elements as specifically claimed.

## Claims

1. A container for a consumable substance having an alterable electronic memory component programmed with coded information designating recycle information.

2. The container for a consumable substance of Claim 1, wherein the electronic memory component comprises a programmable read only memory.

3. The container for a consumable substance of Claim 1, wherein the electronic memory component comprises an electrically erasable programmable read only memory.

4. The container for a consumable substance of Claim 1, wherein the electronic memory component comprises a non-volatile random access memory.

5. The container for a consumable substance of Claim 1, further comprising a serial data interface to the electronic memory component.

6. The container for a consumable substance of Claim 5, further comprising a wireless data link to the serial data interface.

7. The container for a consumable substance of Claim 6, wherein the wireless data link is a radio frequency link.

8. The container for a consumable substance of Claim 7, wherein the radio frequency link further comprises a loop antenna formed of a printed conductor.

9. The container for a consumable substance of Claim 1, wherein the container further comprises an inkjet printhead.

10. The container for a consumable substance of Claim 1, wherein the container for a consumable substance further comprises a fuel cell.

11. The container for a consumable substance of Claim 1, wherein the coded information designating recycle information comprises recycling instructions for consumers.

12. The container for a consumable substance of Claim 1, wherein the coded information designating recycle information comprises recycling instructions for recycling facilities.

13. The container for a consumable substance of Claim 1, wherein the coded information designating recycle information comprises a record of cumulative use of the container.

14. The container for a consumable substance of Claim 13, wherein the container is refurbishable, and the record of cumulative use includes information for determining when refurbishment is due.
